Europäisches Patentamt

European Patent Office

Office européen des brevets

(19)

(11) Veröffentlichungsnummer: **0 115 044**
**B1**

(12) **EUROPÄISCHE PATENTSCHRIFT**

(45) Veröffentlichungstag der Patentschrift:
**11.10.89**

(51) Int. Cl.⁴: **G 01 S 15/02**, G 01 S 7/62, G 01 S 5/18

(21) Anmeldenummer: **83112943.2**

(22) Anmeldetag: **22.12.83**

(54) **Verfahren zur Gefechtslageaufklärung.**

(30) Priorität: **31.12.82 DE 3248744**

(43) Veröffentlichungstag der Anmeldung:
**08.08.84 Patentblatt 84/32**

(45) Bekanntmachung des Hinweises auf die Patenterteilung: **11.10.89 Patentblatt 89/41**

(84) Benannte Vertragsstaaten:
**FR GB IT SE**

(56) Entgegenhaltungen:
**EP--A-- 0 031 110**
**DE--A-- 2 550 197**
**DE--C-- 1 481 225**
**US--A-- 3 024 441**

(73) Patentinhaber: **Fried. Krupp Gesellschaft mit beschränkter Haftung**
**Altendorfer Strasse 103**
**D-4300 Essen 1 (DE)**

(72) Erfinder: **Hampe, Christoph**
**Rahdeland 11**
**D-2800 Bremen (DE)**
Erfinder: **Petzold, Michael**
**Heidland 16**
**D-2802 Fischerhude (DE)**

EP 0 115 044 B1

**Beschreibung**

Die Erfindung betrifft ein Verfahren zur Gefechtslageaufklärung auf See der im Oberbegriff des Anspruchs 1 genannten Art.

Für einen wirkungsvollen Torpedoangriff ist eine Aufklärung der bestehenden Gefechtslage mit einer übersichtlichen Anzeige über die Anzahl und ggf. Art der Ziele unbedingt erforderlich.

Bei einem bekannten Verfahren der eingangs genannten Art (DE-OS 29 52 315 & EP-A-31110) werden hierzu mittels des Bordsonars ein oder mehrere Ziele aufgefaßt und die Zielpositionen in einer Panoramaanzeige dargestellt. Im Mittelpunkt dieser Panoramaanzeige ist die Position des Fahrzeugs mit dem Bordsonar angezeigt. Die innerhalb einer Gefechtslage übersichtlich dargestellten Ziele ermöglichen eine Entscheidung, welches der Ziele und mit welcher Priorität ein Ziel angegriffen werden muß oder sinnvollerweise werden sollte. Zur Kontrolle des Torpedoangriffs wird die Bahn eines vom Fahrzeug abgesetzten und auf ein ausgewähltes Ziel laufenden Torpedos ebenfalls in der Panoramaanzeige dargestellt.

Bei einem solchen Verfahren zur Gefechtslageaufklärung mit einem Bordsonar ergibt sich die Schwierigkeit, daß bei großer Entfernung vom Fahrzeug und aufgefaßtem Ziel z. B. ein Schiffsverband nur als ein einziger Zielkomplex erkannt wird. Die vom Bordsonar ermittelte Zielposition gibt die Lage des akustischen Schwerpunkts der innerhalb des Zielkomplexes befindlichen Schallquellen an, ohne daß sich in der Zielposition selbst eine Schallquelle befinden muß. Da die einzelnen Schiffe des Schiffsverbandes weder richtungsmäßig noch ihrer Art nach voneinander unterschieden werden können, kann ein Torpedoangriff wegen mangelnder Informationen häufig nicht wirkungsvoll und schon gar nicht optimal gestaltet werden.

Aus der DE-OS 25 50 197 ist bereits ein Verfahren zur dynamischen Kreuzpeilung bekannt, bei dem ein oder mehrere Torpedos von einer Leitstelle, beispielsweise einem U-Boot, abgesetzt werden und Peilwerte zum Ziel dorthin melden. Von der Leitstelle werden die Torpedopositionen durch Koppeln der Bewegungsdaten des Torpedos bestimmt und der Zielort durch Kreuzpeilung vom Torpedo und U-Boot aus ermittelt. Mit einem solchen Verfahren ist es zwar möglich, in der Nähe des Ziels eine genaue Zielortsbestimmung mit passiven Methoden vorzunehmen, ohne daß der Torpedo seinen Angriff verrät, allerdings muß bei dieser Aufklärung in Kauf genommen werden, daß anstelle von besonders lohnenden Zielen innerhalb des Schiffsverbandes lediglich Begleit- und Schutzboote torpediert werden.

Der Erfindung liegt die Aufgabe zugrunde, ein Verfahren zur Aufklärung der Gefechtslage auf See der eingangs genannten Art hinsichtlich der Einzelzielerkennung innerhalb aufgefaßter Zielkomplexe zu verbessern, um Torpedos auf zuvor ausgewählte lohnende Einzelziele ansetzen und damit den Torpedoangriff insgesamt wirksamer gestalten zu können.

Diese Aufgabe wird bei einem Verfahren der im Oberbegriff des Anspruchs 1 definierten Gattung erfindungsgemäß durch die Merkmale im Kennzeichenteil des Anspruchs 1 gelöst.

Mit dem erfindungsgemäßen Verfahren ist es möglich, Einzelziele innerhalb eines komplexen Zieles, z. B. eines Schiffsverbandes, zu detektieren. Durch den Einsatz des Torpedosonars wird eine Differenzierung des Zielkomplexes durch Horchpeilung erreicht, da das Torpedosonar bei Annäherung an den Zielkomplex einzelne Schallquellen innerhalb des Zielkomplexes richtungsmäßig voneinander trennt. Die Darstellung der Peilungen zu diesen Geräuschquellen mittels Peilstrahlen in der Gefechtslageanzeige in Verbindung mit der Peillinie zwischen Zielposition und Eigenposition gibt dem Betrachter der Gefechtslageanzeige wertvolle Erkenntnisse über die Struktur des Zielkomplexes und damit eine Entscheidungshilfe für den Torpedoangriff. Schnittpunkte zwischen der Peillinie und den von der momentanen Torpedoposition ausgehenden Peilstrahlen geben die auf die Peillinie entlang der Peilstrahlen projizierte Lage der innerhalb des Zielkomplexes aufgefaßten Schallquellen und geben eine erste zahlenmäßige Aufschlüsselung des Zielkomplexes an. Die Beobachtung der Schnittpunkte mit Kreuzmarken einschließlich angezeigter Vergangenheitsmerkmale über einen bestimmten Zeitraum hinweg gestattet Aufschlüsse über das Bewegungsverhalten der gepeilten Schallquelle innerhalb des aufgefaßten Zielkomplexes, wodurch der Torpedoangriff wesentlich erfolgreicher gestaltet werden kann, da das Bewegungsverhalten Hinweise auf markante Ziele im Schiffsverband gibt.

Vergangenheitsmerkmale können z. B. mit der Zeit abfallende Intensität oder Farbe der Kreuzmarke oder ein vorgegebener Zeitraum der Darstellung sein.

Die Struktur der Schallabstrahlung von Schiffen läßt eine Unterscheidung zwischen markanten Zielen, wie etwa schweren Kreuzern oder Flugzeugträgern von Begleitfahrzeugen oder Störbojen erkennen. Mit dem Signalvergleich gemäß Anspruch 1 des erfindungsgemäßen Verfahrens wird ein für einen Torpedoangriff lohnendes Ziel im Zusammenwirken von Fahrzeug- und Torpedosonar ermittelt und angezeigt.

Entsprechend der Weiterbildung des erfindungsgemäßen Verfahrens nach den Ansprüchen 2 und 3 werden Muster eines Empfangssignals oder ein Signalkomplex des vom Bordsonar empfangenen Signals zur Zielauswahl und Klassifizierung benutzt. Unter Signalkomplex werden hier aus den Empfangssignalen des Bordsonars abgeleitete Teilsignale verstanden. Für den Vergleich können die Empfangssignale in mannigfach verarbeiteter Form herangezogen werden, z. B. einzelne Spektralbereiche oder einzelne Spektrallinien oder auch Spektren der demodulierten Empfangssignale. Es können aber auch aus den Spektren abgeleitete Angaben, z. B. über eine Grundfrequenz im Spektrum und deren Vielfache, oder Angaben über die Anzahl der Schrauben, über deren Blatt- und Drehzahl herangezogen werden, um markante Ziele zu identifizieren.

Mit einer weiteren vorteilhaften Ausbildung des erfindungsgemäßen Verfahrens nach den Ansprüchen 4 und 5 wird ein angenäherter Kurs ausgewählter Ziele im Schiffsverband in der Gefechtslageanzeige angezeigt.

Mit einer vorteilhaften Ausbildung des erfindungsgemäßen Verfahrens nach Anspruch 6 wird die Aufklärung verbessert, weil bei einem quer zur Peillinie erfolgenden Anlauf des Torpedos sämtliche Peilstrahlen die Peillinie kreuzen und damit eine Beobachtung des Bewegungsverhaltens sämtlicher gepeilter Schallquellen ermöglicht wird. Es wird der bei einer Lauschfahrt des Torpedos durch das Torpedosonar erfaßbare Bereich dargestellt. Die Abhängigkeit der Reichweite der Auffassung eines Torpedosonars von der Eigengeschwindigkeit des Torpedos ist in der DE-PS 14 81 225 beschrieben.

Die Aufklärung des Zielkomplexes wird beschleunigt, weil der Torpedo sehr schnell zum Zielkomplex gelangen kann. Der Torpedo muß nicht, wie es in der DE-PS 14 81 225 notwendig ist, Lauschpausen mit Lauschfahrt einlegen, um zu versuchen, das Ziel zu detektieren, weil aus der erfindungsgemäßen Darstellung ersichtlich ist, daß der Torpedo überhaupt erst dann ein Ziel im Zielkomplex auffassen kann, wenn sich sein Sonarauffaßbereich der Zielposition nähert.

Mit einer weiteren vorteilhaften Ausbildung des erfindungsgemäßen Verfahrens nach Anspruch 7 wird die Möglichkeit der Torpedos zur Aufklärung in Abhängigkeit von der Ausstattung des Torpedosonars angezeigt. Bei Torpedos, deren Torpedosonar momentan nur in eine einzige Richtung empfindlich ist, kann die Empfangsrichtung entweder über den gesamten Sonarauffaßbereich geschwenkt werden, oder es wird der Torpedo selbst geschwenkt. In diesen Fällen werden die Peilstrahlen nacheinander angezeigt, und es ist zu erkennen, ob und wann der gesamte Zielkomplex erfaßt ist, nämlich dann, wenn beim weiteren Schwenken des Torpedos bzw. seiner Empfangsrichtung keine weiteren Peilstrahlen mehr erscheinen. Sämtliche Empfangsrichtungen erscheinen gleichzeitig, wenn der Torpedo ein sog. Fächersonar mit einer Vielzahl von nebeneinanderliegenden Richtempfindlichkeiten aufweist, beim Erfassen von mehreren Zielen erscheinen die Peilstrahlen alle gleichzeitig.

Mit einer weiteren vorteilhaften Ausbildung des erfindungsgemäßen Verfahrens nach Anspruch 8 wird ein besonders an die anthropotechnischen Möglichkeiten angepaßtes Verfahren zum Feststellen von Übereinstimmungen von Signalen aus Zielpeilungen beschrieben.

Mit einer weiteren vorteilhaften Ausbildung des erfindungsgemäßen Verfahrens nach Anspruch 9 wird durch das Löschen der Signalmarken angezeigt, ob das Ziel aus dem Sonarbereich herausgelaufen ist, oder ob das Ziel eine geänderte Schallabstrahlung aufweist, etwa bei einem Schaden des Antriebssystems mit starker Fahrstufenverringerung.

Mit einer vorteilhaften Ausbildung des erfindungsgemäßen Verfahrens nach Anspruch 10 ist einerseits eine Anzeige über die Ausdehnung des Schiffsverbandes quer zur Peillinie mindestens bis zur Unterlaufmarke zu erkennen. Zum Zeitpunkt des Unterlaufens erlöscht der nach Voraus gerichtete Peilstrahl und auch die zugehörigen Signalmarken. Faßt das Torpedosonar anschließend wieder eine Schallquelle auf, so wird dies durch einen Peilstrich dargestellt, der auch dann wieder Signalmarken zeigen kann, nämlich wenn der Torpedo das ausgewählte Ziel noch nicht erreicht hat.

Unterläuft der Torpedo hingegen das ausgewählte Ziel, so könnte nach Unterlauf ein Peilstrahl zu einem anderen Ziel dargestellt werden, dem jedoch die Signalmarken fehlen. Durch das Fehlen der Signalmarken wird nach einer weiteren vorteilhaften Ausbildung der erfindungsgemäßen Verfahrens nach Anspruch 11 eine Zündmarke in der Gefechtslagedarstellung angezeigt zum Zeichen, daß der Torpedo das gesuchte Ziel erreicht hat.

Die bisher beschriebenen Maßnahmen zum Darstellen der Gefechtslage sind mit passiven Horchgeräten durchführbar. Sie geben bereits eine so genaue Aufklärung des Zielkomplexes, daß es für einen Torpedoangriff u. U. nur eine einzige Lotung aus kurzer Entfernung zu einem Ziel bedarf.

Nach einer vorteilhaften Ausbildung des erfindungsgemäßen Verfahrens nach Anspruch 12 wird nur eine einzige Richtung für die Lotung ausgewählt und in der Gefechtslageanzeige dargestellt.

Nach einer weiteren vorteilhaften Ausbildung des erfindungsgemäßen Verfahrens nach Anspruch 13 wird in der Gefechtslageanzeige mittels einer Echomarke der Abstand des Torpedos vom Ziel dargestellt. Die Echomarke kennzeichnet auch die momentane Position des Ziels und liefert damit eine weitere Aussage über die Ausdehnung des Schiffsverbandes quer zur Peillinie.

Nach einer weiteren vorteilhaften Ausführungsform des erfindungsgemäßen Verfahrens nach Anspruch 14 wird Aufklärung darüber gegeben, daß eine gepeilte Schallquelle kein echtes Ziel, sondern eine Schallquelle sehr geringen Ausmaßes, also eine Störboje, ist.

Nach einer weiteren vorteilhaften Ausführungsform des erfindungsgemäßen Verfahrens nach Anspruch 15 wird die Dauer empfangener Echosignale in symbolischer Form dargestellt. Die Auswertung der Echosignale kann z. B. nach dem in der US-PS 3 024 441 beschriebenen Verfahren erfolgen. Echosignale von großer Dauer zeigen an, daß ein großer Reflektor, d. h. ein großes Schiff angelotet wurde.

In einer weiteren vorteilhaften Ausführungsform des erfindungsgemäßen Verfahrens nach Anspruch 16 wird angezeigt, daß das Torpedosonar einen Sendeimpuls eines der Fahrzeuge im Schiffsverband aufgefangen hat. Das Alarmmuster zeigt eine Ortungsaktivität eines der Fahrzeuge im Schiffsverband, möglicherweise eines U-Bootjägers, an.

In einer weiteren vorteilhaften Ausführungsform des erfindungsgemäßen Verfahrens nach Anspruch 17 wird die Aufklärung über die Gefechtslage durch eine vergrößerte Ausschnittsdarstellung des zielnahen Bereichs der Gefechtslageanzeige erhöht.

Die mit der Erfindung erzielten Vorteile bestehen insbesondere darin, daß eine detaillierte und übersichtliche Darstellung einer Gefechtslage auf See gewonnen wird, die sowohl einzelne Schiffe innerhalb eines Schiffsverbandes als auch deren Bewegungsverhalten im Schiffsverband zu erkennen gestattet, so daß ein gezielter Angriff auf ausgewählte Schiffe durchgeführt werden kann. Durch Darstellung einer Vielzahl von mittels des Bord- und Torpedosonars gewonnemer Informationen in der Gefechtslageanzeige läßt sich das Gefechtsfeld und seine Änderungen jederzeit optimal erkennen und daraus eine wertvolle Hilfe für taktische Entscheidungen ableiten. Eine Aktivortung durch den Torpedo ist, wenn überhaupt, nur auf sehr kurze Entfernung zu einem ausgewählten Ziel und kurz vor dem Angriff notwendig. Damit ist ein Eigenverrat der Torpedos praktisch ausgeschlossen.

Die Erfindung ist anhand von in der Zeichnung schematisch dargestellten Ausführungsbeispielen einer Gefechtslageanzeige im folgenden näher beschrieben. Es zeigen :

Fig. 1 die Gefechtslageanzeige eines Seegefechtsgebietes während eines Anlaufs eines Torpedos auf einen Zielkomplex,

Fig. 2 einen vergrößerten Ausschnitt aus der Gefechtslageanzeige gemäß Fig. 1 zu einem späteren Zeitpunkt,

Fig. 3 eine Darstellung von Empfangssignalen aus einem Bordsonar und einem Torpedosonar,

Fig. 4 eine Darstellung der Frequenzspektren von Empfangssignalen des Bord- und Torpedosonars für einen vorgebbaren Zeitabschnitt,

Fig. 5 die Gefechtslageanzeige eines Seegefechtsgebietes gemäß einem weiteren Ausführungsbeispiel mit zwei einen Zielkomplex anlaufenden Torpedos.

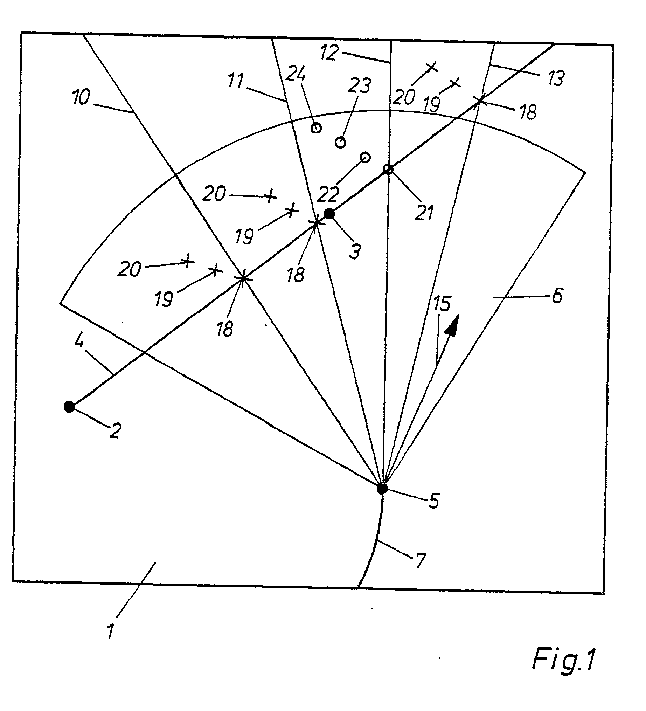

Auf einem Sichtschirm 1 einer Vorrichtung zur Gefechtslageanzeige (Fig. 1) ist eine Eigenposition 2 eines ein Bordsonar tragenden Fahrzeugs dargestellt. Als eine Zielposition 3 ist ein vom Bordsonar ermittelter akustischer Schwerpunkt sämtlicher Schallquellen in einem Schiffsverband, die vom Bordsonar als ein einziger Zielkomplex erfaßt werden, dargestellt. Eine ebenfalls dargestellte Peillinie 4 verbindet die Eigenposition 2 mit der Zielposition 3.

Fortlaufend wird eine momentane Position 5 eines zur Zielposition 3 laufenden Torpedos in der Gefechtslageanzeige dargestellt. Ein maximaler Sonarauffaßbereich 6 eines im Torpedo installierten Torpedosonars wird nach Auffaßwinkel und Auffaßentfernung dargestellt, und zwar mit seinem Ursprung in der momentanen Position 5 des Torpedos. Der dargestellte Sonarauffaßbereich 6 gilt bezüglich seiner Auffaßentfernung nur bei einer Lauschfahrt des Torpedos, bei höherer Marschgeschwindigkeit ist der wirkliche Auffaßbereich kleiner. Aus dem dargestellten Sonarauffaßbereich 6 ist die Laufrichtung des Torpedos erkennbar. Sobald die Zielposition 3 innerhalb des Sonarauffaßbereiches 6 liegt, ist auch erkennbar, daß das Torpedosonar bei Lauschfahrt von der momentanen Position 5 aus den Zielkomplex auffassen kann. Eine Folge sämtlicher Positionen 5 des Torpedos ist als Bahnkurve 7 dargestellt, deren vorderster Punkt die aktuelle Position 5 ist.

Durch Horchpeilung detektiert das Torpedosonar innerhalb des Zielkomplexes vier Schallquellen, die in der Gefechtslageanzeige durch vier von der aktuellen Position 5 des Torpedos ausgehende Peilstrahlen 10 bis 13 angezeigt werden.

Ein Pfeil 15 zeigt die jeweilige momentane Empfangsrichtung des Torpedosonars an. Die Empfangsrichtung und damit der Pfeil 15 wandert innerhalb des Sonarauffaßbereiches 6 hin und her, die Peilstrahlen 10 bis 13 werden stets wieder neu dargestellt, sobald das Torpedosonar eine der vier Schallquellen erfaßt.

Zum Ermitteln des Bewegungsverhaltens der Fahrzeuge im Schiffsverband werden in gleichen vorgebbaren Zeitabständen die Schnittpunkte zwischen der Peillinie 4 und den Peilstrahlen 10, 11 und 13 mit Kreuzmarken 18 markiert. Durch die Bewegung des Zielkomplexes ändert die Peillinie 4 ihre Lage in der Gefechtslageanzeige, so daß die zu vorhergegangenen Zeitpunkten dargestellten Kreuzmarken 19 und 20 nicht mehr auf der Pellinie 4 liegen. Die Folge der Kreuzmarken 18 bis 20 geben das jeweilige Bewegungsverhalten der einzelnen aufgefaßten Schallquellen an.

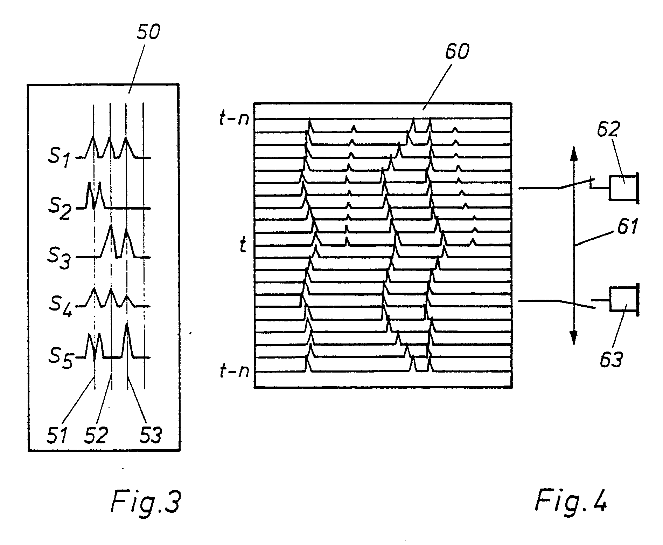

Am Peilstrahl 12 ist anstelle einer Kreuzmarke eine kreisförmige Signalmarke 21 dargestellt. Die Signalmarke 21 zeigt als Ergebnis einer Analyse der vom Bordsonar und vom Torpedosonar erfaßten Signale einen Kurs zu einem aus den Zielpeilungen ausgesuchten, lohnenden Ziel für einen Torpedoangriff an. Die Analyse der Signale wird in Verbindung mit Fig. 3 u. Fig. 4 näher beschrieben.

Die Signalmarke 21 wird in vorgebbaren Zeitabständen neu ermittelt und dargestellt, wobei die zu vorangegangenen Zeitpunkten ermittelten Signalmarken 22 bis 24 weiter dargestellt werden. Diese Signalmarken 22 bis 24 liegen nicht mehr auf der Peillinie 4, was durch die bereits beschriebene Verlagerung der Peillinie 4 bewirkt ist. Die Folge der Signalmarken 21 bis 24 gibt ein angenähertes Bewegungsverhalten des ausgewählten Ziels an.

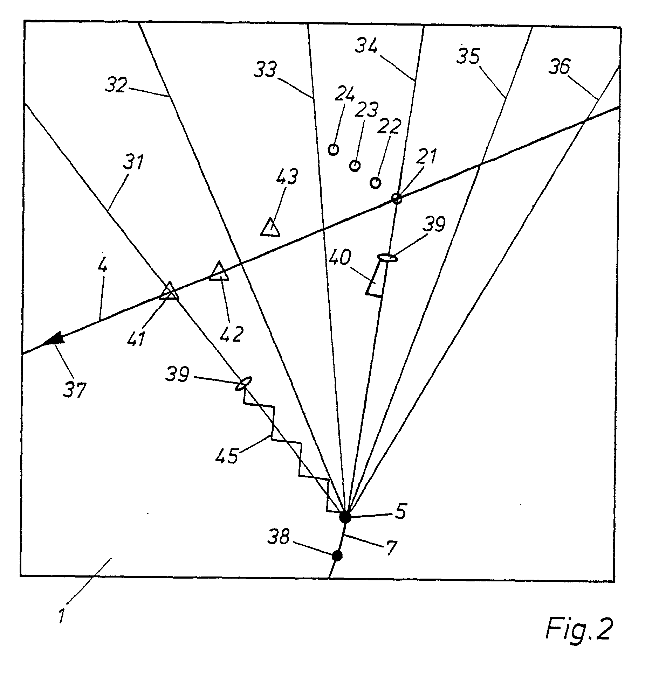

Fig. 2 zeigt einen Ausschnitt der Gefechtslageanzeige, der zu einem späteren Zeitpunkt der Aufklärung erstellt ist als die Darstellung in Fig. 1. Der Zielkomplex ist jetzt in sechs Schallquellen aufgelöst. Diese Auflösung wird durch sechs von der Position 5 des Torpedos ausgehende Peilstrahlen 31 bis 36 angezeigt. Die Eigenposition liegt außerhalb der Darstellung, so daß nur ein Teil der Peillinie 4 dargestellt wird. An der Peillinie 4 ist eine Richtungsmarke 37 angebracht, die die Richtung zur Eigenposition anzeigt.

Wegen der Übersichtlichkeit der Gefechtslagedarstellung sind keine Kreuzmarken, sondern nur die Signalmarken 21 und zwar jetzt am Peilstrahl 34 dargestellt.

Der Torpedo hat zu einem bereits zurückliegenden Zeitpunkt eine Schallquelle unterlaufen, was durch eine Unterlaufmarke 38 in der Gefechtslageanzeige dargestellt wird. Die unterlaufene Schallquelle ist gemäß einem Signalvergleich nicht das interessierende Ziel gewesen, so daß der Torpedo weiter in Richtung des Peilstrahls 34 gelenkt wird.

Zum Vorbereiten eines Angriffs wird der wahre Abstand des ausgewählten Ziels vom Torpedo durch einen in die Richtung des Peilstrahls 34 ausgesendeten Schallimpuls und durch vom Torpedosonar empfangene Echosignale ermittelt und als Echomarke 39 angezeigt, die im richtigen Zielabstand vom Torpedo gesetzt ist und damit auch die wahre Lage des Ziels in der Gefechtslageanzeige angibt. Aus den empfangenen Echosignalen ist eine Echodauer bestimmt worden, diese wird als Symbol 40 am Peilstrahl 34 angezeigt und gibt eine Bestätigung für ein Anloten einer Schallquelle mit großer Ausdehnung als Charakteristikum für ein echtes Ziel.

Das Ergebnis einer weiteren Analyse der vom Bordsonar und vom Torpedosonar empfangenen Signale ist an dem Schnittpunkt des Peilstrahls 31 mit der Peillinie 4 eine dreieckige Signalmarke 41 dargestellt. Die Folge der Signalmarke 41 mit den zu vorangegangenen Zeitpunkten angezeigten dreieckigen Signalmarken 42 und 43 zeigt das Bewegungsverhalten einer Schallquelle mit höherer Geschwindigkeit als das Ziel und scheinbar auf Gegenkurs zum gesamten Zielkomplex. Aus Richtung dieser Schallquelle empfängt das Torpedosonar Impulse, die keine Echosignale eines eigenen Sendeimpulses sind. Am Peilstrahl 31 wird ein Alarmmuster 45 dargestellt, das vor feindlichen Ortungsaktivitäten warnt.

Um die momentane Position dieser Schallquelle zu bestimmen, wird vom Torpedo ein Sendeimpuls in Richtung des Peilstrahls 31 ausgesendet. Die Echomarke 39 am Peilstrahl 31 zeigt die wahre Position dieser Schallquelle an und läßt erkennen, daß ein Fahrzeug etwa auf Gegenkurs zum Torpedo läuft. Der Kurs dieses Fahrzeugs, seine hohe Geschwindigkeit sowie das Aussenden von Impulsen lassen auf die Aktivitäten eines U-Bootjägers schließen. Der Einsatzleitung für den Torpedoangriff auf den Schiffsverband ist mit diesen Hinweisen eine Information gegeben, die eine Entscheidung ermöglicht, ob der Torpedo seinen Angriff auf das ausgewählte Ziel weiterführen soll oder ob zuerst der U-Bootjäger bekämpft werden muß. Um die Aufklärung nicht zu unterbrechen, ist es zweckmäßig, stets mehrere Torpedos zur Aufklärung einzusetzen.

Fig. 3 zeigt eine Anzeigeeinrichtung 50 zum Vergleich von aus Zielpeilungen empfangenen Signalen $S_1$ bis $S_5$. Die Signale $S_1$ bis $S_5$ sind in ihrer Intensität über der Frequenz und untereinander dargestellt. Ein Vergleich wird durch setzbare Linien 51 bis 53 erleichtert. Zur Suche eines für einen Torpedoangriff lohnenden Ziels werden die Signale $S_2$ bis $S_5$ aus den durch die vier Peilstrahlen 10 bis 13 angegebenen Zielpeilungen (vgl. Fig. 1) dargestellt. Als Vergleichssignal $S_1$ kann ein Muster für ein Empfangssignal eines bekannten markanten Ziels dargestellt werden oder auch ein aus dem vom Bordsonar empfangenen Signalen ausgewählter Signalkomplex. Die empfangenen Signale können für diesen Vergleich in vielfältiger Weise verarbeitet werden und etwa als Spektren oder Teilspektren der Signale oder als demodulierte Teilspektren dargestellt werden, wie es Fig. 3 schematisch zeigt.

Durch den Vergleich der dargestellten Signale ist zu erkennen, daß das Signal $S_4$ die signifikanten Signalanteile im Signalkomplex $S_1$ enthält und daß die durch den Peilstrahl 12 angegebene Zielpeilung die Peilung des ausgewählten Ziels ist. Zur Markierung der Zielrichtung wird eine kreisförmige Signalmarke 21 an dem Schnittpunkt der Peillinie 4 mit dem Peilstrahl 12 angezeigt (vgl. Fig. 1). Damit ist der Gefechtslageanzeige ein Kurs zum Angreifen des ausgewählten Ziels für den Torpedo in Richtung des Peilstrahls 12 entnehmbar.

Fig. 4 zeigt eine Einrichtung zum Vergleichen von zwei Signalen, deren Verarbeitung der in Fig. 3 dargestellten entspricht. Die Darstellung zeigt einen Vergleich von Signal $S_1$ vom Bordsonar mit dem Signal $S_4$ (vgl. Fig. 3) aus der durch den Peilstrahl 12 angegebenen Zielpeilung (vgl. Fig. 1). Die Signale sind auf einem Bildschirm 60 dargestellt, in dessen Mitte die jeweiligen Momentanwerte dargestellt sind, während Vergangenheitswerte der beiden Signale nach oben und unten ablaufend dargestellt sind. Ein Abhören der Signale ist über einen Umschalter 61 mit wechselweise anschaltbaren Hörern 62, 63 möglich, in denen jeweils das gesamte Signal über die vorgegebene Zeit dargeboten wird. Die Darstellung zeigt, daß das Signal $S_1$ vom Bordsonar mehr Signalanteile enthält als das Signal $S_4$, das Bordsonar empfängt Signalanteile, die das Torpedosonar nicht empfangen kann, ein Vergleich wird dadurch aber nicht erschwert.

Die Vergleichsmöglichkeit mit einem Signalverlauf über einen vorgegebenen Zeitraum gestattet es, Übereinstimmungen zu ermitteln, die bei einer Bewertung von Momentanwerten, wie es in Fig. 3 dargestellt ist, nicht mehr möglich ist, wenn die Momentanwerte durch Störungen nicht mehr identifizierbar sind. Insbesondere aber ermöglicht eine optische und akustische Darbietung einen sehr hohen Grad an Detektion einer Übereinstimmung.

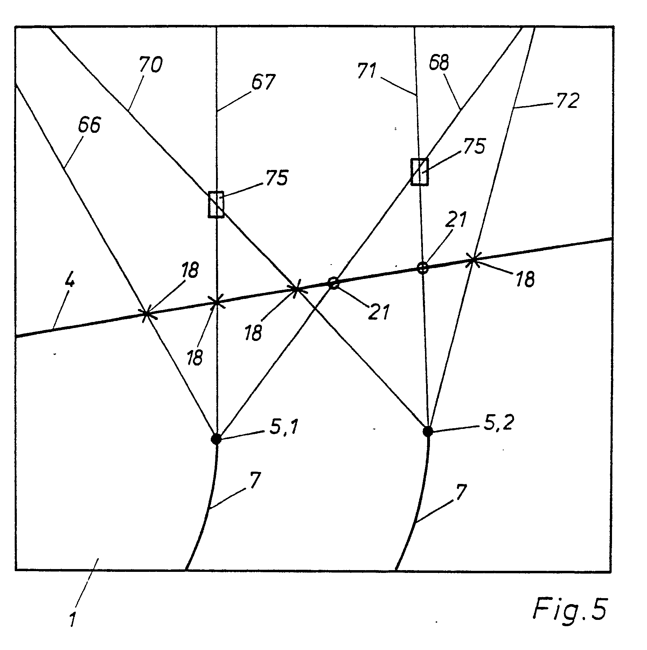

Über Wahlschalter und Speicher (nicht dargestellt) ist es möglich, das Signal $S_1$ mit einem der Signale $S_2$ bis $S_5$ zu vergleichen, aber auch Signale aus Torpedopeilungen untereinander zu vergleichen (vgl. Fig. 5).

Fig. 5 zeigt einen Ausschnitt aus der Gefechtslageanzeige mit einem Anlauf von zwei Torpedos. Jedes Torpedosonar detektiert drei Schallquellen, die durch je drei von den aktuellen Positionen $5_1$, $5_2$ jedes Torpedos ausgestrahlte Peilstrahlen 66 bis 68 bzw. 70 bis 72 angezeigt werden. Jedes Torpedosonar hat ein lohnendes Ziel ausgemacht, wie durch die Signalmarken an den Peilstrahlen 68 und 71 zu erkennen ist. Um zu verhindern, daß beide Torpedos das gleiche Ziel anlaufen, wird ein Vergleich der Signale aus den Zielpeilungen der beiden Torpedos gemäß dem unter Fig. 3 und Fig. 4 beschriebenen Verfahren durchgeführt. In die Gefechtslageanzeige wird eine Zielmarke 75 an Schnittpunkten der Peilstrahlen 68 und 71 dargestellt, die beide mit einer Signalmarke 21 versehen sind, wenn eine Übereinstimmung festgestellt wird. Eine weitere Zielmarke 75 ist am Schnittpunkt der Peilstrahlen 67 und 70 dargestellt, um anzuzeigen, daß auch hier eine Übereinstimmung von Signalen vorliegt. Dieses Ziel ist jedoch nicht als lohnendes Ziel bezeichnet, wie ein Fehlen von Signalmarken an den betr. Peilstrahlen angibt. In der Gefechtslageanzeige kann auf dieses Verfahren die Positionen zweier Schiffe im Schiffsverband im Verhältnis zu den Positionen $5_1$, $5_2$ der Torpedos dargestellt werden. Die Gefechtslageanzeige erlaubt eine Entscheidung, welcher Torpedo das ausgewählte Ziel angreifen soll und welcher die weitere Aufklärung zu übernehmen hat.

**Patentansprüche**

1. Verfahren zur Gefechtslageaufklärung auf See, bei welchem ein auf einem Fahrzeug installiertes Bordsonar zur Zielauffassung und Zielpeilung verwendet wird und ermittelte Zielpositionen, Fahrzeugpositionen sowie fortlaufend Positionen mindestens eines zur Zielposition laufenden Torpedos in einer Gefechtslageanzeige dargestellt werden, dadurch gekennzeichnet, daß zusätzlich Zielpeilungen mittels eines im Torpedo installierten Torpedosonars, das mit dem Fahrzeug über eine Datenleitung verbunden ist, durchgeführt und die Zielpeilungen in der Gefechtslageanzeige als von der momentanen Torpedoposition ausgehende Peilstrahlen dargestellt werden, daß in der Gefechtslageanzeige eine durch die momentane Fahrzeugposition und die momentane Zielposition hindurchgehende Peillinie dargestellt wird, daß Signale aus Zielpeilungen des Torpedosonars mit vom Bordsonar oder vom Torpedosonar mindestens eines weiteren Torpedos empfangenen Signalen auf Übereinstimmung verglichen werden und daß bei Übereinstimmung in der Gefechtslageanzeige eine Signalmarke in Zuordnung zu mindestens einem der die Zielpeilungen anzeigenden Peilstrahlen dargestellt wird.

2. Verfahren nach Anspruch 1, dadurch gekennzeichnet, daß ein Muster eines Empfangssignals von einem bekannten markanten Zieltyp ausgewählt wird und mit Signalen aus Zielpeilungen des Torpedosonars auf Übereinstimmung verglichen wird.

3. Verfahren nach Anspruch 1 oder 2, dadurch gekennzeichnet, daß aus dem vom Bordsonar empfangenen Signalen ein Signalkomplex ausgewählt und mit Signalen aus Zielpeilungen des Torpedosonars auf Übereinstimmung verglichen wird.

4. Verfahren nach einem der Ansprüche 1 bis 3, dadurch gekennzeichnet, daß die Darstellung der Signalmarke am Schnittpunkt der die beiden Zielpeilungen anzeigenden Peilstrahlen, bzw. am Schnittpunkt von Peilstrahl und Peillinie, erfolgt.

5. Verfahren nach Anspruch 1 oder 4, dadurch gekennzeichnet, daß die Darstellung von Signalmarken in vorgebbaren Zeitabständen erfolgt und daß den Signalmarken Vergangenheitsmerkmale zugeordnet werden.

6. Verfahren nach einem der Ansprüche 1 bis 5, dadurch gekennzeichnet, daß in der Gefechtslageanzeige der maximale Sonarauffaßbereich des Torpedosonars nach Auffaßwinkel und Ortungsreichweite in Zuordnung zu der Momentanposition des Torpedos dargestellt wird, daß der Torpedo bei Zielanlauf zumindest nach Zielauffassung durch das Torpedosonar so gelenkt wird, daß seine aus der Positionsfolge sich ergebende Bahnkurve in der Gefechtslageanzeige in einem Winkel vorzugsweise quer zur Peillinie verläuft und daß ein Steuerimpuls gewonnen wird, sobald der Auffaßbereich die Zielposition erreicht hat, wobei der Steuerimpuls zum Ändern der Torpedogeschwindigkeit benutzt wird.

7. Verfahren nach Anspruch 6, dadurch gekennzeichnet, daß in dem dargestellten Auffaßbereich des Torpedosonars dessen momentane Empfangsrichtung markiert wird.

8. Verfahren nach einem der Ansprüche 1 bis 7, dadurch gekennzeichnet, daß zum Signalvergleich die zu vergleichenden Signale akustisch und/oder optisch dargestellt werden und die Übereinstimmung durch Vergleich der Momentanwerte und/oder von in einem Zeitraum festgehaltenen Vergangenheitswerten der zu vergleichenden Signale geprüft wird.

9. Verfahren nach einem der Ansprüche 1 bis 5, dadurch gekennzeichnet, daß die Signalmarken bei Wegfall der Übereinstimmung gelöscht werden.

10. Verfahren nach einem der Ansprüche 1 bis 9, dadurch gekennzeichnet, daß eine von dem Torpedo unterlaufene Schallquelle in der Gefechtslageanzeige durch eine an der Unterlaufposition des Torpedos erscheinende Unterlaufmarke dargestellt wird.

11. Verfahren nach Anspruch 10, dadurch gekennzeichnet, daß die Unterlaufmarke als Zündmarke angezeigt wird, wenn die Signalmarken, die dem die Schallquelle peilenden Peilstrahl zugeordnet sind, nach Unterlauf verlöschen.

12. Verfahren nach einem der Ansprüche 1 bis 11, dadurch gekennzeichnet, daß mittels des Torpedosonars mindestens ein Sendeimpuls in eine anhand der Peilstrahlen auswählbare Senderichtung abgestrahlt wird und daß der mit der Senderichtung sich deckende Peilstrahl in der Gefechtslageanzeige markiert wird.

13. Verfahren nach Anspruch 12, dadurch gekennzeichnet, daß mit Empfang eines Echos die Zielentfernung zum Torpedo bestimmt und die Zielentfernung im Maßstab der Gefechtslageanzeige als Echomarke am Peilstrahl dargestellt wird.

14. Verfahren nach Anspruch 13, dadurch gekennzeichnet, daß derjenige Peilstrahl, der in Richtung auf eine Geräuschquelle weist, von der keine Echosignale empfangen wurden, in der Gefechtslageanzeige mit einer von der Darstellung der anderen Peilstrahlen stark abhebenden Weise dargestellt wird.

15. Verfahren nach Anspruch 14, dadurch gekennzeichnet, daß ein Symbol für die Dauer der Echoimpulse am Peilstrahl dargestellt wird.

16. Verfahren nach einem der Ansprüche 1 bis 15, dadurch gekennzeichnet, daß ein Peilstrahl, aus dessen Richtung vom Torpedosonar ein Fremdimpuls empfangen wird, in der Gefechtslageanzeige durch ein zugeordnetes Alarmmuster markiert wird.

17. Verfahren nach einem der Ansprüche 1 bis 16, dadurch gekennzeichnet, daß nach Zielauffassung durch das Torpedosonar in der Gefechtslageanzeige ein vergrößerter Ausschnitt des zielnahen Bereichs dargestellt wird, der die Torpedopositionen mit momentan zugeordnetem Auffaßbereich des Torpedosonars, die Peilstrahlen und einen Teil der Peillinie enthält, und daß an der Peillinie ein zu der Fahrzeugposition weisendes Richtungssymbol dargestellt wird.

## Claims

1. A method for tactical situation reconnaissance at sea, wherein on-board sonar installed on a vessel is used for target acquisition and target bearings finding, the target positions determined, the vessel positions and the continuously determined positions of at least one torpedo travelling to the target position being displayed on a tactical situation display, characterized in that target bearings finding is performed by means of torpedo sonar installed in the torpedo connected to the vessel via a data line, the target bearings finding being displayed on the tactical situation display in the form of bearings finding beams emitted from the position of the torpedo at the moment; a bearings finding line which passes through the position of the vessel at the moment and the target position at the moment is displayed on the tactical situation display; signals of target bearings finding from the torpedo sonar are compared for agreement with signals received from the on-board sonar or from the torpedo sonar of at least one other torpedo; and if they agree, a signal marking is displayed on the tactical situation display in association with at least one of the bearings finding beams indicating the target bearings.

2. A method according to claim 1, characterized in that a sample is selected of a reception signal of a known clearly defined type of target and compared for agreement with signals from target bearings finding of the torpedo sonar.

3. A method according to claims 1 or 2, characterized in that a complex of signals is selected from the signals received from the on-board sonar and compared for agreement with signals from target bearings finding of the torpedo sonar.

4. A method according to any of claims 1 to 3, characterized in that the signal marking is displayed at the point of intersection of the bearings finding beams indicating the two target bearings or at the point of intersection of the bearings finding beam and the line of bearings finding.

5. A method according to claims 1 or 4, characterized in that signal markings are displayed at predeterminable intervals of time and past features are associated with the signal markings.

6. A method according to any of claims 1 to 5, characterized in that the maximum sonar acquisition range of the torpedo sonar is displayed on the tactical situation display by angle of acquisition and location range in association with the position of the torpedo at the moment; when approaching the target the torpedo is so steered, at least after the acquisition of the target by the torpedo sonar, that its path line resulting from the sequence of positions extends at an angle on the tactical situation display, preferably transversely of the bearings finding line; and a control pulse is obtained as soon as the acquisition range has reached the target position, the control pulse being used to change the speed of the torpedo.

7. A method according to claim 6, characterized in that the direction of reception of the torpedo sonar at the moment is marked on its acquisition range displayed.

8. A method according to any of claims 1 to 7, characterized in that for signal comparison the signals to be compared are displayed acoustically and/or optically, and agreement is checked by comparing the values at the moment of the signals to be compared and/or their past values determined over a period of time.

9. A method according to any of claims 1 to 5, characterized in that the signal markings are cancelled when agreement ceases.

10. A method according to any of claims 1 to 9, characterized in that a sound source under which the torpedo runs is displayed on the tactical situation display by an underrunning marking appearing at the underrunning position of the torpedo.

11. A method according to claim 10, characterized in that the underrunning marking is displayed as a detonating marking if the signal markings associated with the bearings finding beam locating the sound source are cancelled after underrunning.

12. A method according to any of claims 1 to 11, characterized in that at least one transmission pulse is beamed by the torpedo sonar in a transmitting direction selectable on the basis of the bearings findings beams, and the bearings finding beam registering with the transmission direction is marked on the tactical situation display.

13. A method according to claim 12, characterized in that the distance of the target from the torpedo is determined by the reception of an echo, and the distance of the target is displayed as an echo marking on the bearings finding beam to the scale of the tactical situation display.

14. A method according to claim 13, characterized in that that bearings finding beam which points in the direction of a noise source from which no echo signals have been received is displayed on the tactical situation display in a manner differing strongly from the representation of the other bearings finding beams.

15. A method according to claim 14, characterized in that a symbol is displayed on the bearings finding beam for the duration of the echo pulses.

16. A method according to any of claims 1 to 15, characterized in that a bearings finding beam from whose direction the torpedo sonar receives an external pulse is marked on the tactical situation display by an associated alarm pattern.

17. A method according to any of claims 1 to 16, characterized in that after target acquisition by the torpedo sonar, an enlarged detail of that zone adjacent the target is displayed on the tactical situation display which contains the torpedo positions with the acquisition zone of the torpedo sonar associated therewith at the time, the bearings finding beams and a portion of the bearings finding line; and a direction symbol pointing towards the position of the vessel is displayed on the bearings finding line.

## Revendications

1. Procédé de reconnaissance d'une situation tactique sur mer, selon lequel on utilise un sonar de bord, installé sur un bâtiment, pour réaliser la détection et le relèvement de cibles, et des positions déterminées de la cible, des positions déterminées du bâtiment ainsi que, en permanence, des positions d'au moins une torpille se déplaçant en direction de la position de la cible sont représentées sur un dispositif d'affichage de la situation tactique, caractérisé en ce que des relèvements de la cible sont exécutés, de façon supplémentaire, à l'aide d'un sonar installé dans la torpille et relié au bâtiment par l'intermédiaire d'une ligne de transmission de données, et les relèvements de la cible sur le dispositif d'affichage de la situation tactique sont représentés sous la forme de rayons de relèvement partant de la position instantanée de la torpille, qu'une droite de relèvement passant par la position instantanée du bâtiment et par la position instantanée de la cible est représentée sur le dispositif d'affichage de la situation tactique, que des signaux obtenus à partir de relèvements de la cible par le sonar de la torpille sont comparés à des signaux reçus par le sonar de bord ou par le sonar d'au moins une autre torpille, pour voir s'ils coïncident, et qu'en cas de coïncidence, une marque de signal est représentée d'une manière associée à au moins l'un des rayons de relèvement indiquant les relèvements de la cible, dans le dispositif d'affichage de la situation tactique.

2. Procédé selon la revendication 1, caractérisé en ce qu'un modèle du signal de réception d'un type de cible importante connu est sélectionné et comparé à des signaux provenant de relèvements de la cible, exécutés par le sonar de la torpille pour voir s'ils coïncident.

3. Procédé selon la revendication 1 ou 2, caractérisé en ce qu'un complexe de signaux est sélectionné à partir des signaux reçus par le sonar installé à bord et est comparé à des signaux provenant de relèvements de la cible, exécutés par le sonar de la torpille, pour voir s'ils coïncident.

4. Procédé selon l'une des revendications 1 à 3, caractérisé en ce que la représentation de la marque de signal est réalisée au niveau du point d'intersection des rayons de relèvement indiquant les deux relèvements de la cible ou au niveau du point d'intersection du rayon de relèvement et de la droite de relèvement.

5. Procédé selon la revendication 1 ou 4, caractérisé en ce que la représentation de marques de signaux s'effectue à des intervalles de temps pouvant être prédéterminés et que des caractéristiques antérieures sont associées aux marques de signaux.

6. Procédé selon l'une des revendications 1 à 5, caractérisé en ce que le dispositif d'affichage de la situation tactique se trouve représentée la zone maximale de détection du sonar de la torpille, conformément à l'angle de détection et à la portée de localisation et en association avec la position instantanée de la torpille, que, lorsqu'elle se rapproche de la cible, la torpille est déviée au moins après la détection de la cible par le sonar de la torpille de manière que sa trajectoire, obtenue à partir de la succession de positions dans le dispositif d'affichage de la situation tactique s'étend en faisant un certain angle par rapport à la droite de relèvement, en étant de préférence transversale par rapport à cette dernière, et qu'une impulsion de commande est délivrée dès que la zone de détection a atteint la position de la cible, l'impulsion de commande étant utilisée pour modifier la vitesse de la torpille.

7. Procédé selon la revendication 6, caractérisé en ce que la direction instantanée de réception du sonar de la torpille est marquée dans la zone de détection représentée de ce sonar.

8. Procédé selon l'une des revendications 1 à 7, caractérisé en ce que pour la comparaison des signaux, les signaux devant être comparés sont représentés d'une manière acoustique et/ou optique et que la coïncidence est contrôlée par comparaison des valeurs instantanées et/ou de valeurs antérieures, conservées pendant un intervalle de temps, des signaux à comparer.

9. Procédé selon l'une des revendications 1 à 5, caractérisé en ce que les marques de signaux sont effacées en cas d'absence de coïncidence.

10. Procédé selon l'une des revendications 1 à 9, caractérisé en ce qu'une source sonore, au-dessous de laquelle passe la torpille, est représentée dans le dispositif d'affichage de la situation tactique, par une marque de passage qui apparaît au niveau de la position, dans laquelle la torpille passe au-dessous de la source.

11. Procédé selon la revendication 10, caractérisé en ce que la marque de passage au-dessous de la source sonore est affichée sous la forme d'une marque de mise à feu, lorsque les marques de signaux, qui sont associées au rayon de relèvement qui repère la source sonore, disparaissent lors du passage au-dessous de la source sonore.

12. Procédé selon l'une des revendications 1 à 11, caractérisé en ce qu'au moins une impulsion d'émission est émise par le sonar de la torpille, dans une direction d'émission pouvant être sélectionnée sur la base des rayons de relèvement, et que le rayon de relèvement, qui coïncide avec la direction d'émission, est marqué sur le dispositif d'affichage de la situation tactique.

13. Procédé selon la revendication 12, caractérisé en ce que, lors de la réception d'un écho, la distance entre la torpille et la cible est déterminée et la distance à la cible est représentée à l'échelle du dispositif d'affichage de la situation tactique sous la forme de marques d'échos sur le rayon de relèvement.

14. Procédé suivant la revendication 13, caractérisé par le fait que le rayon de relèvement, qui est dirigé vers une source de bruit, à partir de laquelle aucun signal d'écho n'a été reçu, est représenté, dans le dispositif d'affichage de la situation tactique, d'une manière qui diffère fortement de la représentation des autres rayons de relèvement.

15. Procédé selon la revendication 14, caractérisé en ce qu'un symbole est représenté pour la durée des échos d'impulsions sur le rayon de relèvement.

16. Procédé suivant l'une des revendications 1 à 15, caractérisé en ce qu'un rayon de relèvement, dans la direction duquel une impulsion étrangère est reçue de la part du sonar de la torpille, est marquée dans le dispositif d'affichage de la situation tactique, par un dessin d'alarme associé.

17. Procédé selon l'une des revendications 1 à 16, caractérisé en ce qu'après détection de la cible par le sonar de la torpille, sur le dispositif d'affichage de la situation tactique se trouve représentée une section agrandie de la zone proche de la cible, qui contient les positions de la torpille avec la gamme instantanée associée de relèvement du sonar de la torpille, les rayons de relèvement et une partie de la droite de relèvement, et qu'un symbole de direction tourné vers la position du bâtiment est représenté sur la droite de relèvement.

Fig.1

Fig.2

Fig.3

Fig.4

Fig.5